# EUROPÄISCHE PATENTANMELDUNG

(11) **EP 2 842 906 A1**
(43) Veröffentlichungstag der Anmeldung: **04.03.2015**
(21) Anmeldenummer: 14182815.2
(22) Anmeldetag: 29.08.2014
(51) Int. Cl.: B67C 3/02, B67C 7/00

(54) **Verfahren und Vorrichtung zum Befüllen von Großbehältnissen**

(30) Priorität: 29.08.2013 DE 102013109377
(71) Anmelder: Krones AG, 93073 Neutraubling (DE)
(72) Erfinder: Poeschl, Stefan, 93073 Neutraubling (DE)
(74) Vertreter: Bittner, Bernhard

(57) **Zusammenfassung**

Ein Verfahren zum Herstellen von Getränkebehältnissen (10) mit den Schritten:
- Zurverfügungstellen eines komprimierten Behältnisses
- Beaufschlagen des komprimierten Behältnisses mit einem gasförmigen Medium um dieses zu expandieren, wobei bevorzugt während der Expansion eine Wandungsdicke des Behältnisses sich um nicht mehr als 10% ändert;
- Befüllen des expandierten Behältnisses mit der Flüssigkeit.

## Beschreibung

Die vorliegende Erfindung bezieht sich auf ein Verfahren und eine Vorrichtung zum Befüllen von Behältnissen, insbesondere von Kunststoffbehältnissen und insbesondere von Kunststoffgroßbehältnissen. Derartige Kunststoffgroßbehältnisse sind aus dem Stand der Technik bekannt. Diese können beispielsweise in Zapfanlagen verwendet werden, um größere Mengen von Getränken zu zapfen. Aus dem Stand der Technik sind dabei diverse Verfahren und Vorrichtungen zum Befüllen derartiger Großbehältnisse bekannt. Insbesondere der Transport derartiger Behältnisse stellt aufgrund des relativ hohen Volumens dieser Behältnisse sowie auch des Füllgewichts oftmals Probleme dar.

Es werden daher ein Verfahren und eine Vorrichtung vorgeschlagen, welche insbesondere auch in der Anwendung auf Großbehältnisse eine vereinfachte und kostengünstige Herstellung erlauben. Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Herstellen von Getränkebehältnissen wird zunächst ein komprimiertes Behältnis zur Verfügung gestellt. Anschließend wird das komprimierte Behältnis mit einem gasförmigen Medium beaufschlagt, um dieses zu expandieren, wobei sich bevorzugt während der Expansion eine Wandungsdicke des Behältnisses um nicht mehr als 10% ändert. Schließlich wird dieses so expandierte Behältnis mit einer Flüssigkeit befüllt.

Dabei wird darauf hingewiesen, dass es sich bei dem Vorgang der Expansion mit dem gasförmigen Medium nicht um einen Blasformvorgang handelt, bei dem, wie aus dem Stand der Technik bekannt, Kunststoffvorformlinge zu Kunststoffbehältnissen expandiert werden, sondern es handelt sich hierbei um einen Vorgang, bei dem ein bereits hergestelltes jedoch komprimiertes Behältnis expandiert und insbesondere entfaltet wird.

Aus dem internen Stand der Technik der Anmelderin ist ein Verfahren bekannt, bei dem dieses Expandieren des komprimierten Behältnisses durch die einzufüllende Flüssigkeit selbst erfolgt.

In Abweichung hierzu wird jedoch nun vorgeschlagen, dass zunächst das Behältnis mit einem Gas expandiert und erst anschließend mit einer Flüssigkeit befüllt wird.

Daneben wäre es auch noch möglich, ein Tragelement an dem Behältnis anzubringen und/oder auch ein Etikett.

Bevorzugt handelt es sich bei den Getränkebehältnissen um Kunststoffbehältnisse, es wäre jedoch auch eine Anwendung auf andere Materialien, wie beispielsweise Aluminiumfässer denkbar.

Bevorzugt wird das Behältnis durch die Beaufschlagung mit einem gasförmigen Medium entfaltet. So wäre es möglich, dass in einem vorausgehenden Schritt das Behältnis durch einen Faltvorgang komprimiert wird und anschließend, wie hier beschrieben, durch die Beaufschlagung mit einem gasförmigen Medium entfaltet wird.

Bei einem bevorzugten Verfahren wird das Behältnis entlang einer bevorzugt umlaufenden Faltkante entfaltet. Vorteilhaft weist das Behältnis in einem komprimierten Zustand lediglich eine derartige umlaufende Faltkante auf.

Bei einem weiteren vorteilhaften Verfahren bleibt ein Querschnitt wenigstens eines Abschnittes des Behältnisses während der Expansion unverändert. Dabei kann es sich beispielsweise um einen Querschnitt im Bereich eines Behältnisbodens handeln, in den ein anderer Bereich des Behältnisses, beispielsweise ein Mündungsbereich des Behältnisses, eingefaltet wird.

Bei einem weiteren vorteilhaften Verfahren wird das Behältnis vor dem Expandieren durch einen Kompressionsvorgang komprimiert.

Im Gegensatz zu Verfahren aus dem Stand der Technik wird also hier vorgeschlagen, dass zunächst ein Kunststoffbehältnis hergestellt wird, insbesondere durch einen Blasvorgang, und anschließend dieses Behältnis wieder verkleinert wird. Erst in einem weiteren Verfahrensschritt wird das Behältnis, insbesondere durch das Beaufschlagen mit dem gasförmigen Medium, wieder expandiert. Auf diese Weise kann erreicht werden, dass ein Abfüllbetrieb ohne entsprechende Blasformmaschinen auskommt. Mit anderen Worten kann zunächst bei einem Hersteller das Behältnis in eine zwar hergestellte, jedoch komprimierte Form gebracht werden und anschließend durch den Expansionsvorgang expandiert werden (in einem Abfüllbetrieb). In diesem Falle sind bei dem Abfüller lediglich Vorrichtungen wie beispielsweise Füllmaschinen und auch eine Expansionseinrichtung zum Expandieren des Behältnisses nötig.

Auch wäre es möglich, dass Behältnisse mehrfach verwendet werden. In diesem Fall kann der Schritt des Herstellen des Behältnisses entfallen und durch ein Zur - Verfügung Stellen des Behältnisses ersetzt werden. So könnte ein derartiges Behältnis mehrfach komprimiert und anschließend wieder entfaltet werden.

Bei einem bevorzugten Verfahren wird das Behältnis zur Komprimierung zusammengerollt, so dass ein Mündungsbereich des Behältnisses innerhalb eines anderen Bereiches des Behältnisses liegt. Dabei kann das Behältnis in seiner Längsrichtung unter Verwendung von Stempeleinrichtungen derart gestaucht werden, dass ein bestimmter Bereich des Behältnisses, insbesondere ein oberer Bereich, in den unteren Bereich eingeschoben bzw. eingerollt wird. Vorteilhaft erfolgt ein derartiges Komprimieren bzw. Einrollen des Kunststoffvorbehältnisses entlang einer bevorzugt umlaufenden Faltkante.

Bei einem weiteren bevorzugten Verfahren wird das Behältnis derart komprimiert bzw. zusammengerollt, dass es mit weiteren in der gleichen Weise komprimierten bzw. zusammengerollten Behältnissen stapelbar ist. Bevorzugt wird jedoch hier bereits ein Behältnis hergestellt, welches in seiner Gesamtheit mit einer Vielzahl gleichartiger Behältnisse stapelbar ist. Ein weiteres faltbares Behältnis ergibt sich aus der noch nicht veröffentlichten DE 10 2012 101 868.5, deren Offenbarung, insbesondere auf den Seiten 7 bis 9 wird ebenfalls durch Bezugnahme vollständig auch zum Offenbarungsgehalt der vorliegenden Anmeldung gemacht.

Ein derartiges mit einer Flüssigkeit befüllbares Behältnis - bei dem es sich insbesondere um ein Kunststoffbehältnis handelt - weist eine Mündung, einen Bodenbereich und einen einteilig mit der Mündung und dem Bodenbereich ausgebildeten Grundkörper auf. Dabei ist der Grundkörper in einem gefalteten Zustand des Behältnisses um einen vorgegebenen Biegewinkel derart um eine vorgegebene umlaufende Faltkante des Grundkörpers gebogen, dass die Mündung des Behältnisses näher an den Bodenbereich angeordnet ist, als die umlaufende Faltkante. Erfindungsgemäß ist eine Relativposition (und/oder ein Abstand) der Faltkante gegenüber dem Bodenbereich des Behältnisses während einer Expansion des Behältnisses veränderbar. Vorteilhaft ist auch eine Relativposition der Faltkante gegenüber der Mündung des Behältnisses während einer Expansion des Behältnisses veränderbar.

Es wird damit hier ein faltbares Behältnis vorgeschlagen, welches insbesondere so gefaltet ist, dass der Mündungsbereich nahe an dem Bodenbereich des Behältnisses liegt. Damit ist vorteilhaft der Grundkörper selbst mit wenigstens einer Faltkante und bevorzugt mit genau einer Faltkante zusammengefaltet. Vorteilhaft handelt es sich bei dem Behältnis um ein Kunststoffbehältnis. Daneben könnte jedoch auch ein anderes faltbares Material verwendet werden.

Bei einer bevorzugten Ausführungsform liegt eine Außenoberfläche des Grundkörpers umlaufend wenigstens abschnittsweise einer Innenoberfläche Grundkörpers - insbesondere in einer radialen Richtung des Behältnisses - gegenüber. Auf diese Weise wird in dem zusammengefalteten Zustand des Behältnisses eine sehr effektive Innenvolumenverkleinerung erreicht.

Bevorzugt weisen die Außenoberflächen und die Innenoberflächen des Behältnisses wenigstens abschnittsweise zueinander einen Abstand auf, der < 0,2 cm ist. Vorteilhaft handelt es sich hier um einen umlaufenden Abstand und besonders bevorzugt auch um einen Abstand in einer radialen Richtung des Behältnisses.

Bei einer weiteren vorteilhaften Ausführungsform ist eine Wandungsdicke des Grundkörpers wenigstens abschnittsweise (und besonderes bevorzugt in dem gesamten Bereich des Grundkörpers) im Wesentlichen konstant. Es wird damit hier vorgeschlagen, dass nicht etwa ein dünnwandiger Bereich zum Falten des Behältnisses an einem anderen Bereich angelegt wird, sondern, dass bevorzugt eine Faltung eines Wandungsbereichs mit im Wesentlichen konstanter Wandungsdicke erfolgt. Vorteilhaft ist die besagte Faltkante auch während eines Expansionsvorgangs verschiebbar. Es wird also nicht eine konstant liegende Faltkante vorgeschlagen, um die ein Faltvorgang durchgeführt wird, sondern ein verschiebbarer Faltbereich, der im Rahmen der Expansion des Behältnisses auch wandert.

Schließlich sind auch aus dem noch unveröffentlichten Stand der Technik der Anmelderin, nämlich der oben genannten DE 10 2012 101 868.5 eine Vorrichtung und ein Verfahren bekannt, mittels denen ein Behältnis mit einer Flüssigkeit befüllt und dabei auch expandiert werden kann. Der Gegenstand dieser Offenbarung, insbesondere die Beschreibung der einzelnen Verfahrensschritte sowie des zugehörigen Behältnisses auf den Seiten 2 bis 5, wird ebenfalls zum Gegenstand der vorliegenden Anmeldung durch Bezugnahme gemacht.

Bei einem Verfahren zum Befüllen eines Behältnisses mit einer Flüssigkeit wird das Behältnis über eine Mündung des Behältnisses befüllt und ein Innenvolumen des Behältnisses vergrößert sich während der Füllung. Dabei beträgt das Innenvolumen des anschließend befüllten Behältnisses wenigstens das Doppelte (bevorzugt wenigstens das Dreifache, bevorzugt wenigstens das Fünffache und besonders bevorzugt wenigstens das Zehnfache) des Volumens des unbefüllten Behältnisses.

Es wird daher vorgeschlagen, dass sich das Behältnis selbst vor dem Füllvorgang, hier durch die Beaufschlagung mit dem gasförmigen Medium, vergrößert. Damit wird das Behältnis hier bevorzugt unmittelbar vor dem Füllvorgang aufgeblasen.

Vorteilhaft findet also während dieses Expansionsvorgangs keine oder zumindest keine wesentliche Verstreckung der Wandung und/oder des Materials des Kunststoffbehältnisses statt, sondern insbesondere lediglich eine Entfaltung. Vorzugsweise weist daher das zu befüllende Behältnis neben seiner Mündung in wenigstens einem Bereich des Behältnisses bereits seine endgültige Form auf, beispielsweise in einem Bodenbereich.

So ist es insbesondere möglich, dass das durch den Expansionsvorgang hergestellte Behältnis derart gefaltet wird, dass sein Innenvolumen reduziert wird. In dem gefalteten Zustand liegt bevorzugt ein vorgegebener Wandungsabschnitt und insbesondere ein umlaufender Wandungsabschnitt benachbart zu einem weiteren vorgegebenen Wandungsabschnitt und insbesondere einem weiteren umlaufenden Wandungsabschnitt. Vorteilhaft berühren sich diese Wandungsabschnitte in einem zusammengefalteten Zustand der Behältnisse wenigstens abschnittsweise und bevorzugt entlang einer umlaufenden Fläche.

Bei einem weiteren vorteilhaften Verfahren wird das Behältnis so gefaltet bzw. eingerollt, dass ein Volumenverhältnis zwischen dem Kunststoffvorformling und dem volumenreduzierten Behältnis kleiner ist als 1:2, bevorzugt 1:1,5 und besonders bevorzugt kleiner als 1:1. Vorteilhaft liegt dabei ein Volumenverhältnis zwischen dem Kunststoffvorformling und dem nicht eingerollten Behältnis im Falle eines 20-Liter-Behältnisses bei 1:50.

Bevorzugt tritt bei dem besagten Stauchungs- bzw. Faltungsvorgang auch eine Stauchung des Materials auf, die bevorzugt permanent ist. Bevorzugt ist diese Verformung auch nach der Befüllung unter Druck noch vorhanden.

Vorteilhaft wird das Behältnis in einem kalten Zustand verformt und insbesondere ohne thermische Einwirkung. Dies kann bedeuten, dass beispielsweise die Kunststoffvorformlinge nach ihrer Umformung zu Kunststoffbehältern abgekühlt werden, bevor sie komprimiert bzw. gefaltet werden. Es kann jedoch auch ausreichen, die geformten Kunststoffbehältnisse lediglich nicht weiter zu erwärmen.

Bei einem weiteren bevorzugten Verfahren wird nach dem Herstellen des Behältnisses an diesem ein Behältnisverschluss angebracht. Vorteilhaft wird dabei im Gegensatz zu aus dem Stand der Technik bekannten Verfahren der Verschluss angebracht, bevor das Behältnis mit einer Flüssigkeit befüllt wird. Dabei ist es möglich, dass der Verschluss an dem Behältnis angebracht wird, bevor dieses komprimiert wird, es wäre jedoch auch möglich, dass der Verschluss an dem Behältnis angebracht wird, nachdem dieses komprimiert wird.

Dabei wäre es möglich, dass vor oder nach dem Komprimieren ein Ventilverschluss angeordnet wird, jedoch besteht auch die Möglichkeit den Verschluss erst nach dem Füllvorgang aufzubringen. In diesem Fall könnte es sich um einen Ventilverschluss handeln, aber auch einen Standardschraubverschluss, der dann bevorzugt wiederum beim Entleeren des Behälters durchstochen wird.

So könnte beispielsweise zum Verschliessen ein Ventilverschluss verwendet werden, der während des Komprimierens ein Ablassen von Luft erlaubt. Daneben handelt es sich bevorzugt um einen Ventilverschluss, durch den hindurch befüllt werden kann und besonders bevorzugt handelt es sich um einen Ventilverschluss, durch den hindurch auch entleert werden kann.

Dabei ist es möglich, dass dieser Verschluss direkt nach dem Blasprozess aufgebracht wird. Daneben kann auch ein Schraubverschluss verwendet werden, der bevorzugt erst nach dem Füllprozess aufgebracht wird.

In einem weiteren Verfahrensschritt wäre es denkbar, dass das Behältnis durch diesen Verschluss hindurch befüllt wird. Dabei kann vorteilhaft dieser Verschluss eine Ventileinrichtung aufweisen, welche ein Befüllen und ein Entleeren des Behältnisses erlaubt. Zum Entleeren dieses Behältnisses kann bevorzugt ein Bereich des Behältnisses und insbesondere der besagte Verschluss durchstoßen werden.

Bei einem weiteren vorteilhaften Verfahren wird ein Behältnisverschluss vor dem Komprimieren des Behältnisses an diesen angebracht. Diese Verfahrensweise bietet den Vorteil, dass es leichter ist, einen Verschluss an dem hergestellten aber noch nicht komprimierten Behältnis anzubringen, da in diesem Falle die Mündung leichter zugänglich ist, als bei einem komprimierten Behältnis. Vorteilhaft handelt es sich in diesem Falle um einen Verschluss, der einen Gasaustritt ermöglicht, insbesondere zum Zwecke des Komprimierens des Behältnisses.

Bei einem weiteren bevorzugten Verfahren wird eine Vielzahl von Kunststoffbehältnissen hergestellt und diese Kunststoffbehältnisse werden in einem komprimierten Zustand zu einer Behältniszusammenstellung zusammengestellt. Bevorzugt werden dabei diese Behältnisse ineinander gestapelt. Die komprimierten Behälter könnten auch auf dem Kopf gestapelt werden, d.h. umgedreht, so dass die Öffnung nach unten liegt. Bei einem weiteren bevorzugten Verfahren können diese Behältniszusammenstellungen auch palettiert werden. Bevorzugt werden die Behältnisse zum Zwecke eines Transports zusammengestellt. Dabei ist es möglich, dass diese Behältniszusammenstellungen von einem Herstellungsort an einen Verwendungsort transportiert werden. So können die Behältnisse von einem Herstellerunternehmen hergestellt und auch palettiert bzw. zusammengestellt werden, alsdann zu einem Abfüller transportiert werden und von diesem dann mit einem Getränk befüllt werden. Der Vorteil bei dieser Vorgehensweise besteht darin, dass die Behältnisse in einem sehr platzsparenden Zustand transportiert werden können.

Bei einem weiteren bevorzugten Verfahren wird nach dem Herstellen des Behältnisses an diesem ein Trageelement angeordnet. Dabei kann es sich beispielsweise um einen Tragegriff handeln. Wie oben erwähnt, sind die hier gegenständlichen Behältnisse sehr groß, bzw. weisen ein hohes Gewicht in einem befüllten Zustand auf. Daher ist es bevorzugt, an diesen Behältnissen ein Trageelement, wie insbesondere einen Tragegriff, anzuordnen. Dabei ist es möglich, dass dieses Trageelement unmittelbar nach dem Herstellen des Behältnisses an diesen angeordnet wird. Es wäre jedoch auch denkbar, dass das Trageelement bereits bei der Ausbildung bzw. der Blasformung des Behältnisses an diesen angeordnet wird. Vorteilhaft wird dabei das Trageelement an einem Mündungsabschnitt des Behältnisses angeordnet.

Weiterhin wäre es jedoch auch denkbar, dass das Trageelement an dem Behältnis, welches sich in einem zusammengefalteten Zustand befindet, angeordnet wird. Weiterhin ist es auch möglich, dass das Trageelement vor dem Verschließen des Behältnisses oder nach dem Verschließen des Behältnisses an diesen angeordnet wird. Vorteilhaft kann dabei das Trageelement auf eine Mündung des Behältnisses aufgesetzt bzw. aufgestülpt werden.

In der noch unveröffentlichten Patentanmeldung Nr. 10 2013 102 748 ist ebenfalls ein derartiges Trageelement beschrieben sowie auch ein Verfahren, um dieses an dem Behältnis anzubringen. Der Gegenstand auch dieser Offenbarung, insbesondere die Seiten 4 bis 10, werden hiermit durch Bezugnahme vollständig auch zum Gegenstand der vorliegenden Anmeldung gemacht.

Dabei kann es sich um ein Trageelement zum Tragen von beweglichen Körpern handeln Dabei ist das Trageelement vorteilhaft wenigstens abschnittsweise flexibel ausgebildet und weist einen Befestigungsabschnitt auf, mit dem es wenigstens zeitweise an einem Körper und insbesondere dem Behältnis befestigbar ist. Dieser Befestigungsabschnitt weist bevorzugt eine Öffnung auf, durch welche wenigstens ein Abschnitt des Behältnisses führbar ist, sowie wenigstens einen ersten, mit dem Befestigungsabschnitt verbundenen Greifabschnitt, der eine Öffnung aufweist, durch welche ein Bereich einer menschlichen Hand führbar ist. Dabei wird diese Öffnung bevorzugt durch mehrere Randbereiche begrenzt, wobei an wenigstens einen Randbereich ein gegenüber diesem Randbereich flexibles Halteelement angeordnet ist, welches sich in Richtung der Öffnung erstreckt.

Vorteilhaft ist das Trageelement einteilig ausgebildet und besonders bevorzugt aus einem Kunststoff. Dabei ist vorteilhaft wenigstens ein Bereich des Trageelements flexibel, so dass er um einen Winkel von mehr als 30°, bevorzugt von mehr als 60° gebogen werden kann. Weiterhin ist auch bevorzugt das Halteelement gegenüber dem Randbereich, an dem es angeordnet ist, biegbar und bevorzugt, wie oben erwähnt, um einen Winkel von wenigstens 30°, bevorzugt wenigstens 60°, bevorzugt wenigstens 90°, bevorzugt wenigstens 120°.

Vorteilhaft bilden die mehreren Randbereiche einen geschlossenen Umfang. Vorteilhaft handelt es sich hierbei um wenigstens abschnittsweise geradlinig verlaufende Randbereiche. Vorteilhaft hat die Öffnung einen rechteckförmigen Querschnitt.

Bei einer weiteren vorteilhaften Ausführungsform weist das Trageelement in dem Bereich des Greifabschnitts eine Materialdicke auf, die zwischen 1 mm und 10mm, bevorzugt zwischen 2mm und 4mm liegt.

Bei einer weiteren vorteilhaften Ausführungsform ist an den Befestigungsabschnitt eine Vielzahl von Vorsprüngen angeordnet, welche in einem an den Körper befestigten Zustand auf diesen Körper zuweisen.

Vorteilhaft ist das Trageelement von dem Behältnis, das es tragen soll, lösbar. Auf diese Weise kann das Trageelement zum alleinigen Zwecke des Tragens an den Körper angeordnet und nachher von diesem wieder gelöst werden.

Vorzugsweise ist das Trageelement derart flexibel, dass es sich bei einer Faltung des Behältnisses, an dem es angeordnet ist, wenigstens abschnittsweise an Verformungen des Behältnisses anpasst. So kann sich beispielsweise das Trageelement bei einem Falten des Behältnisses an einen Mündungsbereich des Behältnisses anlegen. Auf diese Weise ist es auch möglich, dass mehrere gefaltete Behältnisse, insbesondere zu Transportzwecken, ineinander gestellt werden, wobei auch in diesem Zustand das Trageelement an den einzelnen Behältnissen befestigt sein kann.

Bei einer weiteren vorteilhaften Ausführungsform wird die Behältniszusammenstellung zu einer Abfülleinrichtung transportiert. Insbesondere kann dabei die Behältniszusammenstellung von einem Herstellungsbetrieb zu einem Abfüllbetrieb transportiert werden.

Bei einem weiteren vorteilhaften Verfahren wird das Behältnis nach dem Komprimieren etikettiert. Dabei ist es möglich, dass das Behältnis in dem komprimierten Zustand etikettiert wird, es wäre jedoch auch möglich, dass das Behältnis etikettiert wird, bevor es mit einer Vielzahl von weiteren Behältnissen zu einer Behältniszusammenstellung zusammengestellt wird. Es wäre jedoch auch denkbar, dass das Behältnis erst nach seinem Transport, beispielsweise in einem Abfüllbetrieb, etikettiert wird. Auf diese Weise wird auf Seiten des Abfüllbetriebs die Variabilität gesteigert. Bevorzugt wird jedoch das Behältnis vor seiner Befüllung etikettiert.

Dabei wird bevorzugt bei dieser Ausgestaltung das Etikett an einem unteren Teilbereich des Behältnisses angeordnet. Anstelle eines Etikettierens wäre es jedoch auch möglich, dass das Behältnis bedruckt wird, dass Markierungen, beispielsweise mittels Laser, eingebrannt werden und dergleichen. Auch können sonstige Markierungen an dem Behältnis angebracht werden, welche beispielsweise charakteristisch für ein Abfülldatum, ein Herstelldatum, ein Ablaufdatum und dergleichen sind.

Bei einem weiteren bevorzugten Verfahren wird ein Kunststoffvorformling hergestellt und aus diesem Kunststoffvorformling wird das Kunststoffbehältnis durch einen Blasvorgang hergestellt. Vorteilhaft wird das Kunststoffbehältnis durch einen Streckblasvorgang hergestellt. Dabei ist es bevorzugt möglich, dass das Kunststoffbehältnis unmittelbar nach der Herstellung des Kunststoffvorformlings hergestellt wird.

Vorteilhaft wird hierzu eine Maschine bzw. eine Vorrichtung verwendet, die direkt der Umformungseinrichtung zum Umformen von Kunststoffvorformlingen zu Kunststoffbehältnissen vorangestellt ist.

Bevorzugt wird daher das Behältnis vor dem Expandieren durch einen Kompressionsvorgang komprimiert.

Bei einem weiteren vorteilhaften Verfahren ist das Behältnis, wie oben erwähnt, ein durch einen Blasformvorgang hergestelltes Behältnis. Damit wird das Behältnis zunächst durch einen Blasformvorgang gefertigt, kann anschließend komprimiert und schließlich wieder expandiert werden.

Bei einem weiteren vorteilhaften Verfahren erfolgt das Expandieren des komprimierten Behältnisses mittels eines Gases, welches aus einer Gruppe von Gasen ausgewählt ist, welches Stickstoff und Kohlendioxid enthält.

Damit wird hier insbesondere vorgeschlagen, dass die Behältnisse nicht beim Befüllen, sondern vorher, insbesondere mittels CO₂ oder wahlweise Stickstoff (N₂) entfaltet bzw. ausgerollt werden. Dies kann im Falle einer Taktmaschine direkt vor derselben erfolgen. In diesem Falle könnten die offenen Behältnisse bzw. Fässer direkt in den nächsten Arbeitsschritt übergeben werden. In diesen Fällen sind die Behältnisse dann vollständig (zu 100%) mit CO₂ gefüllt und müssen dann nur noch minimal bzw. nicht mehr gespült werden. Bei Großanlagen kann dies halbautomatisch, beispielsweise in einem Trockenteil erfolgen, von dem aus die Behältnisse (wahlweise verschlossen), zum Beispiel über einen Lufttransport oder eine Transporteinrichtung wie ein Transportband oder eine Transportkette zu einer Fülleinrichtung befördert werden.

Dort kann ein Verschluss entfernt und das Behältnis gefüllt werden. Daneben ist es auch denkbar, dass ein Verschluss nach einer Entfernung wiederverwendet wird. Auch könnte ein Behältnis vor dem Füllen mit CO₂ aufgeblasen und bevorzugt auch vorgespannt werden, was insbesondere direkt in einer Füllstation erfolgen kann.

Vor dem Aufblasen kann jedoch bei den hier beschriebenen Ausgestaltungen das eingerollte Behältnis auch mit einem Vakuum beaufschlagt werden.

Mit anderen Worten wird das Behältnis vorteilhaft vor dem Beaufschlagen mit dem gasförmigen Medium evakuiert. Dies kann zu dem Zweck erfolgen, um Luft aus dem Behältnis vollständig zu entnehmen, um auf diese Weise die Haltbarkeit eines später eingefüllten Getränkes zu erhöhen.

Bevorzugt wird vor dem Beaufschlagen mit dem gasförmigen Medium ein Verschlusselement zum Verschließen des Behältnisses von einer Mündung des Behältnisses entfernt. So ist es denkbar, dass zunächst die Behältnisse geformt werden, anschließend komprimiert werden und in diesem komprimierten Zustand ein Verschluss an den komprimierten Behältnissen angebracht wird. Auch wäre es möglich, dass ein Verschluss vor dem Komprimieren des Behältnisses an diesen angebracht wird.

Der Vorteil der hier beschriebenen Ausgestaltung ist insbesondere für kleine Abfüllbetriebe bzw. Brauereien, dass der Vorgang des Ausrollens mit CO₂ vor der eigentlichen Füllstation in einer trockenen Umgebung ablaufen kann. Dadurch kann das Abfüllen in einer sauberen Umgebung stattfinden. Auch der Füller und das Behältnishandling in einem Großgebindefüller höherer Leistung werden dadurch vereinfacht, da die aufwendige Mechanik, die zum Ausrollen notwendig ist, vorgeschaltet wird. Der Vorteil der Verringerung des CO₂-Verbrauches bleibt erhalten, da die Behältnisse nicht gespült, sondern lediglich einmal mit CO₂ aufgeblasen werden.

Die vorliegende Erfindung ist weiterhin auf eine Vorrichtung zum Herstellen von mit Flüssigkeiten befüllten Behältnissen gerichtet. Diese Vorrichtung weist eine Expansionseinrichtung auf, welche geeignet und dazu bestimmt ist, durch einen Umformungsvorgang bereits hergestellte und anschließend komprimierte Behältnisse durch Beaufschlagung mit einem gasförmigen Medium zu expandieren. Weiterhin ist eine in einer Transportrichtung der Behältnisse der Expansionseinrichtung nachgeordnete Befüllungseinrichtung vorgesehen, welche die expandierten Behältnisse mit einer Flüssigkeit befüllt. Vorteilhaft ist daher auch eine Transporteinrichtung vorgesehen, welche die Behältnisse während der Expansion durch die Expansionseinrichtung transportiert. Bevorzugt ist auch eine Transporteinrichtung vorgesehen, welche die Behältnisse von der Expansionseinrichtung zu der Befüllungseinrichtung fördert.

Bei einer weiteren vorteilhaften Ausführungsform ist es auch denkbar, das während des Befüllvorgangs wieder aus dem Behältnis herausgedrängte Gas, beispielsweise CO₂, wiederum zur Expansion eines weiteren Behältnisses zu verwenden. So kann beispielsweise ein Reservoir für das gasförmige Medium vorhanden sein, von dem aus jeweils die Expansion der Behältnisse erfolgt.

Bei einer weiteren vorteilhaften Ausführungsform weist eine komplette Anlage auch eine Behälterherstellungsvorrichtung auf, bei der es sich insbesondere um eine Blasformmaschine handelt. Vorteilhaft ist auch eine Komprimierungseinrichtung vorgesehen, welche die beispielsweise durch den Blasformvorgang hergestellten Behältnisse, komprimiert. Daneben kann auch eine Behältniszusammenstellungseinrichtung vorgesehen sein, die eine Vielzahl von komprimierten Behältnissen zu einer Gruppe zusammenstellt, beispielsweise ineinander stapelt.

Weitere Vorteile und Ausführungsformen ergeben sich aus der beigefügten Zeichnung. Dabei zeigt:
- Fig. 1: Einen schematischen Ablauf eines erfindungsgemäßen Verfahrens sowie eine erfindungsgemäßen Vorrichtung; und
- Fig. 2: eine weitere Darstellung einer Palette mit Behältnissen.

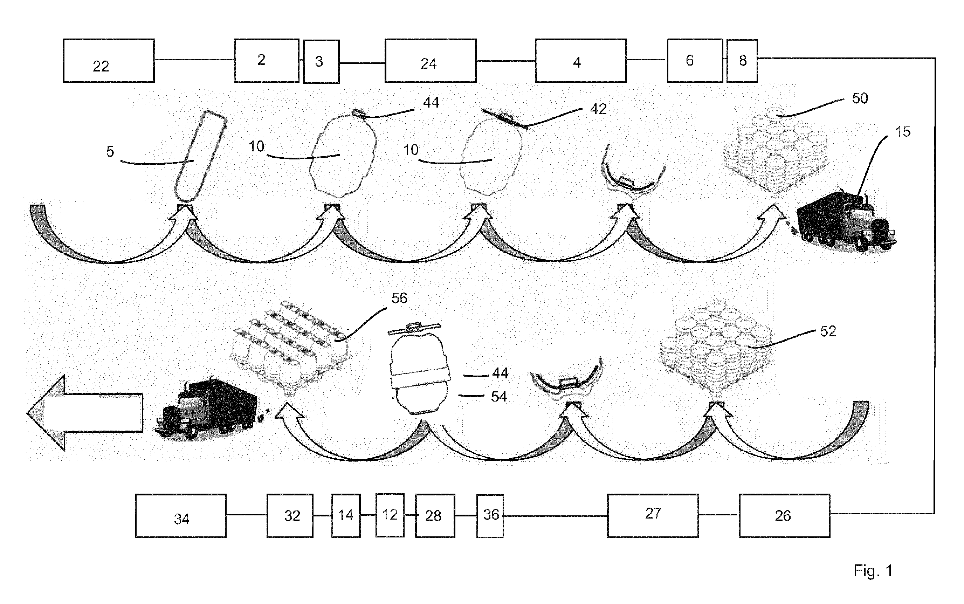

Fig. 1 zeigt einen typischen Ablauf eines erfindungsgemäßen Verfahrens. Es wird jedoch darauf hingewiesen, dass einzelne der Verfahrensschritte auch in einer anderen Reihenfolge ausgeführt werden können und dass weiterhin auch einzelne der Verfahrensschritte, wie etwa das Anordnen eines Griffs dem Behältnis, optional sind.

Im Rahmen des erfindungsgemäßen Verfahrens werden zunächst mit einer Vorformlingsherstellungseinrichtung 22 Kunststoffvorformlinge 5 hergestellt. Die jeweils unter den einzelnen Elementen gezeigten Pfeile veranschaulichen den Verfahrensablauf. Dabei kann beispielsweise dieser Kunststoffvorformling 5 bei einem Unternehmen, wie beispielsweise einem Konverter, hergestellt werden. In einem weiteren Verfahrensschritt wird der Kunststoffvorformling 5 zu einem Kunststoffbehältnis 10 geblasen, wobei hierzu eine Umformungsvorrichtung 2 verwendet wird. Bei dieser Umformungsvorrichtung 2 handelt es sich insbesondere, aber nicht ausschließlich, um eine Blasmaschine, insbesondere eine Streckblasmaschine.

In einem weiteren Verfahrensschritt wird an dem Behältnis ein Verschluss 44 angeordnet, beispielsweise aufgeschraubt. Dabei handelt es sich insbesondere um einen ein Ventil aufweisenden Verschluss. Zu diesem Zweck ist eine Verschließeinrichtung 3 vorgesehen, welche den Verschluss an dem Behältnis anbringen, beispielsweise an dem Behältnis anschrauben. (könnte auch verpresst werden).

In einem weiteren Verfahrensschritt wird ein Trageelement 42, wie beispielsweise ein Tragegriff, an dem Behältnis angeordnet. Dieses kann dabei beispielsweise über den bereits vorhandenen Verschluss gestülpt werden. Das Bezugszeichen 24 kennzeichnet eine Vorrichtung, welche beispielsweise den Tragegriff an dem Behältnis anbringen kann.

In einem weiteren Verfahrensschritt wird das Behältnis kontrolliert komprimiert und insbesondere zusammengerollt. Das Bezugszeichen 4 kennzeichnet eine entsprechende Vorrichtung, welche diesen Einroll- bzw. Komprimierungsvorgang bewirkt. Im Gegensatz zu aus dem Stand der Technik bekannten Verfahren wird also hier ein leeres Behältnis kontrolliert komprimiert.

In einem weiteren Verfahrensschritt wird aus einer Vielzahl von komprimierten Behältnissen eine Behältniszusammenstellung 50 gebildet. Hierzu ist eine Zusammenstellungsbildungseinrichtung 6 vorgesehen. Weiterhin werden die so gebildeten Behältniszusammenstellungen palettiert, wobei beispielsweise eine Palette ca. 500 bis 560 Behältnisse fassen kann (tatsächlich kann die Fassungsmenge auch höher sein, jedoch können sich durch 40' Container / Sattelzughöhe Beschränkungen ergeben). Zu diesem Zweck kann ein Palettierer 8 vorgesehen sein. Behältnisse können mit den Füssen nach unten palettiert werden, jedoch auch mit den Füssen nach oben, d.h. auf dem Faltring aufliegend. Die Behältnisse müssen jedoch nicht auf einer Palette stehen, sie können aber auch im Karton mit Deckel und innen Folie liegend etc. verpackt und verschickt werden.

Anschließend werden die so palettierten Behältnisse mittels eines Transportmittels 15, wobei hier ein LKW dargestellt ist, zu einem weiteren Unternehmen transportiert, beispielsweise einem Abfüller.

Bei dem Abfüller werden die Paletten 52 zunächst entpalettiert, wozu eine Entpalettierungsvorrichtung 26 vorgesehen ist (kann auch händisch erfolgen). Daneben können die so gebildeten Behältniszusammenstellungen auch vereinzelt werden, genauer gesagt die Behältnisse dieser Behältniszusammenstellungen werden vereinzelt, was durch eine Vereinzelungseinrichtung 27 erfolgen kann. (kann auch händisch erfolgen). Auch wäre es hier möglich, dass für die nachfolgenden Schritte der Verschluss von den Behältnissen abgenommen wird.

In einem weiteren Verfahrensschritt werden die Behältnisse expandiert bzw. entfaltet, wobei eine Expansionseinrichtung 36 zum Einsatz kommt. Diese beaufschlagt bevorzugt die Behältnisse mit einem Gas wie insbesondere Kohlendioxid oder Stickstoff.

In einem weiteren Verfahrensschritt werden mithilfe einer Etikettiervorrichtung 28 die Behältnisse etikettiert. Dabei können beispielsweise die Behältnisse, wie oben erwähnt, in einem unteren hälftigen Bereich der Behältnisse, das heißt einen bodennahen hälftigen Bereich, etikettiert werden. Da jedoch zu diesem Zeitpunkt die Behältnisse bereits wieder expandiert sind, kann im Prinzip deren gesamte Außenoberfläche für die Etikettierung genutzt werden.

Daneben bestünde jedoch auch die Möglichkeit nach dem Befüllen erst zu etikettieren und ein Sleeveetikett aufzubringen.

In einem weiteren Verfahrensschritt werden die Behältnisse befüllt. Das Bezugszeichen 12 kennzeichnet eine entsprechende Befüllungseinrichtung. In einem weiteren Verfahrensschritt wäre es noch möglich, Gas bzw. Sauerstoff aus einem Kopfraum der Behältnisse zu entfernen, indem beispielsweise mittels einer Beaufschlagungseinrichtung andere Gase, wie Stickstoff, nach dem Befüllen zugeführt werden. Auf diese Weise kann die Haltbarkeit des Füllgutes innerhalb des Behältnisses erhöht werden.

Mittels einer Verschließeinrichtung 14 werden die gefüllten Behältnisse verschlossen.

Mittels einer weiteren Vorrichtung kann (muss aber nicht) eine zweite Verschlusseinrichtung, beispielsweise eine Hygiene- oder Sicherheitshaube, auf dem Behältnis bzw. auf dem Verschluss 44 des Behältnisses angebracht werden. Alternativ denkbar wäre das Aufsetzen einer Blisterverpackung in welcher eine Einweg-Getränkeleitung liegt. Diese Blisterverpackung verschließt die Öffnung des Verschlusses und kann auch als Hygiene- oder Sicherheitshaube dienen.

Mit einer weiteren Palettiereinrichtung 32 werden die nunmehr befüllten Behältnisse wiederum zu einer Palette 56 palettiert (bzw. umreift, bzw. mit Folie umwickelt) und schließlich können sie mit einer weiteren Transporteinrichtung 34 (wobei hier wiederum ein LKW dargestellt ist) zu den einzelnen Abnehmern gebracht werden.

Es wäre dabei jedoch auch möglich, dass das hier dargestellte Verfahren mit Mehrwegbehältnissen durchgeführt wird, dass also beispielsweise der oben erwähnte Schritt des Herstellens des Kunststoffbehältnisses, beispielsweise durch einen Blasformvorgang, nicht stattfindet, sondern ein bereits vorhandenes Behältnis ein zweites Mal eingerollt wird.

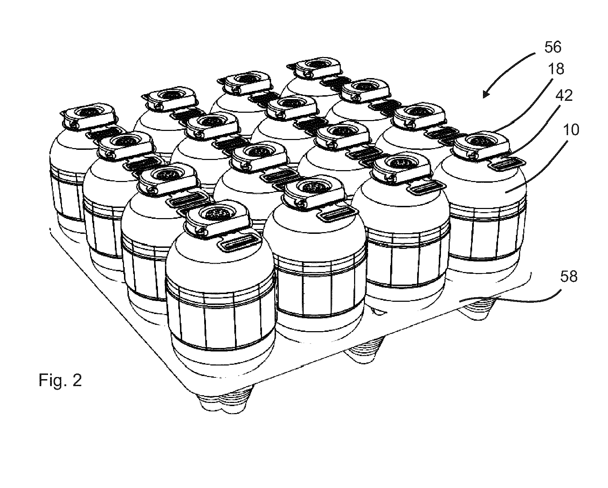

Fig. 2 zeigt eine weitere Ausführungsform einer Palette mit Behältnissen 10. Dabei ist an den Behältnissen 10 zusätzlich zu dem Trageelement auch noch ein Aufnahmeelement 18 bzw. eine Aufnahmeeinrichtung angeordnet. Dieses Aufnahmeelement 18 bildet einen (nicht gezeigten) Aufnahmeraum aus, in dem weitere Elemente, wie etwa eine (Einweg)Zapfleitung und dergleichen untergebracht werden können. Dabei kann das Aufnahmeelement eine Öffnung aufweisen, welche über einen Verschluss des Behältnisses 10 geschoben bzw. gestülpt werden kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 2: Umformungsvorrichtung
- 3: Verschließeinrichtung
- 4: Komprimierungsvorrichtung
- 5: Kunststoffvorformling
- 6: Zusammenstellungsbildungseinrichtung
- 8: Pallettierer
- 10: Kunststoffbehältnis
- 12: Befüllungseinrichtung
- 14: Verschließeinrichtung
- 15: Transportmittel
- 18: Aufnahmeelement
- 22: Vorformlingsherstellungseinrichtung
- 24: Vorrichtung zum Anbringen des Tragegriffes
- 26: Entpalettierungsvorrichtung
- 27: Vereinzelungseinrichtung
- 28: Etikettiervorrichtung
- 32: Palettiereinrichtung
- 34: Transporteinrichtung
- 36: Expansionseinrichtung zum Expandieren der komprimierten Behältnisse
- 42: Trageelement
- 44: Verschluss
- 50: Behältniszusammenstellung
- 52: Palletten
- 56: Pallette
- 58: Träger

## Patentansprüche

1. Verfahren zum Herstellen von Getränkebehältnissen (10) mit den Schritten:
- Zurverfügungstellen eines komprimierten Behältnisses
- Beaufschlagen des komprimierten Behältnisses mit einem gasförmigen Medium um dieses zu expandieren, wobei bevorzugt während der Expansion eine Wandungsdicke des Behältnisses sich um nicht mehr als 10% ändert;
- Befüllen des expandierten Behältnisses mit der Flüssigkeit.

2. Verfahren nach Anspruch 1,
**dadurch gekennzeichnet, dass**
das Behältnis durch die Beaufschlagung mit dem gasförmigen Medium entfaltet wird.

3. Verfahren nach wenigstens einem der vorangegangenen Ansprüche,
**dadurch gekennzeichnet, dass**
ein Querschnitt wenigstens eines Abschnittes des Behältnisses während der Expansion unverändert bleibt.

4. Verfahren nach wenigstens einem der vorangegangenen Ansprüche,
**dadurch gekennzeichnet, dass**
das Behältnis vor dem Expandieren durch einen Kompressionsvorgang komprimiert wird.

5. Verfahren nach wenigstens einem der vorangegangenen Ansprüche,
**dadurch gekennzeichnet, dass**
das Behältnis ein durch einen Blasformvorgang gefertigtes Behältnis ist.

6. Verfahren nach wenigstens einem der vorangegangenen Ansprüche,
**dadurch gekennzeichnet, dass**
das Expandieren des komprimierten Behältnisses mittels eines Gases erfolgt, welches aus einer Gruppe von Gasen ausgewählt ist, welche Stickstoff und Kohlendioxid enthält.

7. Verfahren nach wenigstens einem der vorangegangenen Ansprüche,
**dadurch gekennzeichnet, dass**
das Behältnis vor dem Beaufschlagen mit dem gasförmigen Medium evakuiert wird.

8. Verfahren nach wenigstens einem der vorangegangenen Ansprüche,
**dadurch gekennzeichnet, dass**
vor dem Beaufschlagen mit dem gasförmigen Medium ein Verschlusselement zum Verschließen des Behältnisses (10) von einer Mündung des Behältnisses (10) entfernt wird.

9. Verfahren nach wenigstens einem der vorangegangenen Ansprüche,
**dadurch gekennzeichnet, dass**
das Behältnis nach dem Expandieren mit einer Flüssigkeit befüllt wird.

10. Vorrichtung (1) zum Herstellen von mit Flüssigkeiten befüllten Behältnissen (10), mit einer Expansionseinrichtung (36), welche geeignet und dazu bestimmt ist, durch einen Umformungsvorgang hergestellte und anschließend komprimierte Behältnisse durch Beaufschlagung mit einem gasförmigen Medium zu expandieren und mit einer in einer Transportrichtung der Behältnisse (10) der Expansionseinrichtung (36) nachgeordneten Befüllungseinrichtung (12), welche die expandierten Behältnisse mit einer Flüssigkeit befüllt.
